# EUROPEAN PATENT APPLICATION

(11) **EP 1 800 719 A1**
(43) Date of publication of application: **27.06.2007**
(21) Application number: 05782342.9
(22) Date of filing: 09.09.2005
(51) Int. Cl.: A63F 13/00, A63F 13/10

(54) **GAME PROGRAM, GAME DEVICE, AND GAME METHOD**

(30) Priority: 21.09.2004 JP 2004273571
(71) Applicant: Konami Digital Entertainment Co., Ltd., Minato-ku Tokyo 106-6114 (JP)
(72) Inventor: FUJIOKA, Kenji, c/o Konami Digital Entert.Co., Ltd, Tokyo 1066114 (JP)
(74) Representative: Driver, Virginia Rozanne
(86) International application number: PCT/JP2005/016632
(87) International publication number: WO 2006/033249

(57) **Abstract**

With a game implemented by the present game program, ball dispatch origin characters 70a, 70b, and 70c will be displayed on a monitor 3b. Then, at least one of ball dispatch destination characters 72a, 72b will be displayed on the monitor 3b. Next, it will be determined whether or not a predetermined button 4f of an operation means 4 has been operated. The dispatch destination characters 72a, 72b will be identified when a command means has been placed into contact with the dispatch destination character after it has been determined that the predetermined button 4f of the operation means 4 has been operated. If this occurs, a moving object can be dispatched from the ball dispatch origin characters 70a, 70b, and 70c to the ball dispatch destination characters 72a, 72b.

## Description

### Technical field

The present invention relates to a game program, and in particular to a game program for causing a computer to implement a game that will dispatch a moving object from a character displayed on a touch panel type of monitor. In addition, the present invention relates to a game device and a game method that is actualized by this game program.

### Background art

Various video games have been proposed in the past. Various video games now allow one to issue various commands to a character displayed on a monitor by operating an input unit that is independent of a game unit, e.g., various input buttons on a controller, or by operating various input buttons that are integrally provided on the game unit. For example, a standard game device has a monitor, a game unit that is separate from the monitor, and a controller that is separate from the game unit. A plurality of input buttons are arranged on the controller. In addition, a portable game device has a game unit, a liquid crystal monitor arranged in the approximate central portion of the game unit, and a plurality of input buttons that are arranged on both sides of the liquid crystal monitor. With this type of game device, various commands can be issued to a character displayed on the monitor by operating at least one of the plurality of input buttons.

Thus, one known video game in which commands to a character are performed from input buttons includes a competitive video game, e.g., a baseball game, in which athlete characters are displayed on a monitor and a competition takes place. With this baseball game, if a player causes the ball to be dispatched to a defender and a fielder character catches the ball, the ball will be dispatched from the fielder character who caught the ball to a selected destination if a button corresponding to the destination of the ball, e.g., home base, first base, second base, or third base, is pushed, and a button corresponding to a ball dispatch command is pushed.

### Disclosure of the invention

With conventional baseball games, when a fielder character has caught a ball, the ball will be dispatched from the fielder character to home base, first base, second base, or third base, if a button corresponding to home base, first base, second base, or third base is pushed and a button corresponding to a dispatch command is pushed. At this point, after confirming the play situation on the monitor while blindly touching the buttons corresponding to each base, e.g., four directional command buttons arranged in a cross shape, the player must push a button corresponding to the dispatch command. Generally, after the fielder character has caught the ball, the player must issue a ball dispatch destination command to the fielder in response to the play situation. Because of this, when the player blindly touches the buttons corresponding to each base, the player may accidentally push a button that is different from the desired button.

An object of the present invention is to make it possible to correctly input a command when dispatching a moving object to a character.

A game program according to claim 1 is a program for implementing the following functions on a computer capable of implementing a game in which a moving object is dispatched from a character displayed on a touch panel type of monitor.

(1) A dispatch origin display function that will display a character dispatch origin of a moving object.

(2) A dispatch destination display function that will display a character dispatch destination of the moving object.

(3) A button operation determination function that will determine whether or not a predetermined button of an operation means has been operated.

(4) A dispatch destination character identification function that will, after it has been determined by the button operation determination function that the predetermined button of the operation means has been operated, identify a character as the dispatch destination when a command means is placed into contact with a character that is the dispatch destination.

(5) A moving object dispatch function that will dispatch the moving object from the dispatch origin character to the dispatch destination character identified by the dispatch destination character identification function.

With a game implemented by this program, the character dispatch origin of the moving object will be displayed on the monitor with the dispatch origin display function. The dispatch destination display function will display the character dispatch destination of the moving object on at least one monitor. It will be determined whether or not a predetermined button of the operation means has been operated with the button operation determination function. The dispatch destination character identification function will identify the dispatch destination character when the command means has been placed into contact with the dispatch destination character after it has been determined that a predetermined button of the operation means has been operated by the button operation determination function. The moving object dispatch function will dispatch the moving object from the dispatch origin character to the dispatch destination character identified by the dispatch destination character identification function.

With this game program, the dispatch destination character will be identified when the command means has been placed into contact with the dispatch destination character after it has been determined that a predetermined button of the operation means has been operated. At this point, the moving object will be dispatched from the dispatch origin character to the identified dispatch destination character.

For example, consider a case in which a baseball game is implemented on a touch panel type of monitor, and a player causes a defender to dispatch the ball. Here, with the aforementioned program, when a fielder character has caught a ball, if the command means is placed into contact with the character dispatch destination, e.g., the home base, first base, second base, or third base characters, while a predetermined button of the operation means is pushed or after the predetermined button of the operation means has been pushed, the home base, first base, second base, or third base characters will be identified. At this time, the ball character can be dispatched from the fielder character that caught the ball to the home base, first base, second base, or third base characters. Thus, a player can dispatch the ball character from the fielder character that caught the ball to the home base, first base, second base, or third base characters with a simple operation, in which a predetermined button of the operation means is pushed, and the command means is placed into contact with the dispatch destination character, e.g., the home base, first base, second base, or third base characters. In this way, the player can accurately and easily input commands for causing the fielder character to dispatch the ball character.

A game program according to claim 2 is the game program of claim 1, and is a program for further implementing the following function in a computer.

(6) A dispatch origin character movement function that will, after it has been determined by the button operation determination function that the predetermined button of the operation means has not been operated, move the dispatch origin character to the dispatch destination character when the command means is placed into contact with the dispatch destination character.

With a game implemented by this program, the dispatch origin character movement function will, after it has been determined by the button operation determination function that the predetermined button of the operation means has not been operated, move the dispatch origin character to the dispatch destination character when the command means is placed into contact with the dispatch destination character.

With this game program, the dispatch origin character will be moved to the dispatch destination character when the command means has been placed into contact with the dispatch destination character after it has been determined that a predetermined button of the operation means has not been operated. Because of this, with a baseball game for example, if the command means is placed into contact with the dispatch destination character, e.g., the home base, first base, second base, or third base character, in a state in which the predetermined button of the operation means has not been pushed when a fielder character caught the ball, the fielder character that caught the ball can be moved toward the first base, second base, or third base characters. In this way, a player can also accurately input commands when moving a fielder character.

A game device according to claim 3 is a game device that can implement a game in which a moving object is dispatched from a character displayed on a touch panel type of monitor. This game device comprises dispatch origin display means, dispatch destination display means, button operation determination means, dispatch destination character identification means, and moving object dispatch means. The dispatch origin display will display the dispatch origin character of the moving object on the monitor. The dispatch destination display means will display the character dispatch destination of the moving object on at least one monitor. The button operation determination means will determine whether or not a predetermined button of the operation means has been operated. The dispatch destination character identification means will identify the dispatch destination character when the command means has been placed into contact with the dispatch destination character after it has been determined that a predetermined button of the operation means has been operated by the button operation determination means. The moving object dispatch means will dispatch the moving object from the dispatch origin character to the dispatch destination character identified by the dispatch destination character identification means.

A game method according to claim 4 is a game method that can implement a game in which a moving object is dispatched from a character displayed on a touch panel type of monitor. The game method comprises a dispatch origin display step, a dispatch destination display step, a button operation determination step, a dispatch destination character identification step, and a moving object dispatch step. The dispatch origin display step will display the dispatch origin character of the moving object on the monitor. The dispatch destination display step will display the character dispatch destination of the moving object on at least one monitor. The button operation determination step will determine whether or not a predetermined button of the operation means has been operated. The dispatch destination character identification step will identify the dispatch destination character when the command means has been placed into contact with the dispatch destination character after it has been determined that a predetermined button of the operation means has been operated by the button operation determination step. The moving object dispatch step will dispatch the moving object from the dispatch origin character to the dispatch destination character identified by the dispatch destination character identification step.

### Brief description of the drawings

[Fig. 1] An external view of a portable game unit (an example of a computer) that can use a game program according to the present invention.
[Fig. 2] An example of a control block diagram of the portable game unit.
[Fig. 3] An example of a function block diagram of the portable game unit.
[Fig. 4] A flowchart for explaining the defense system in a baseball game.
[Fig. 5] An explanation of the defense system in a baseball game (dispatch example 1).
[Fig. 6] An explanation of the defense system in a baseball game (dispatch example 2).
[Fig. 7] An explanation of the defense system in a baseball game (movement example 1).
[Fig. 8] A flowchart for explaining the defense system in a baseball game.

### Explanation of the reference numbers

Portable game unit
- 3: Liquid crystal monitor
- 3b: Touch panel type monitor
- 4: Input unit
- 4f: L button
- 50: Dispatch origin display means
- 51: Dispatch destination display means
- 52: Button operation determination means
- 53: Dispatch destination character identification means
- 54: Moving object dispatch means
- 55: Dispatch origin character movement means
- 56: Moving state display means
- 70: Fielder character
- 72: Base character
- 73: Ball character

### Best mode for carrying out the invention

### [Construction of the game device]

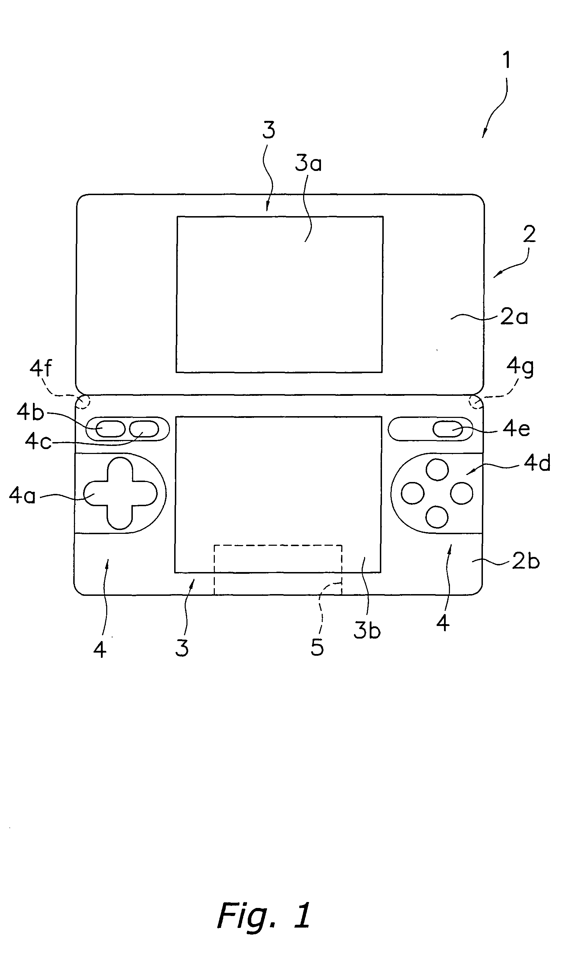

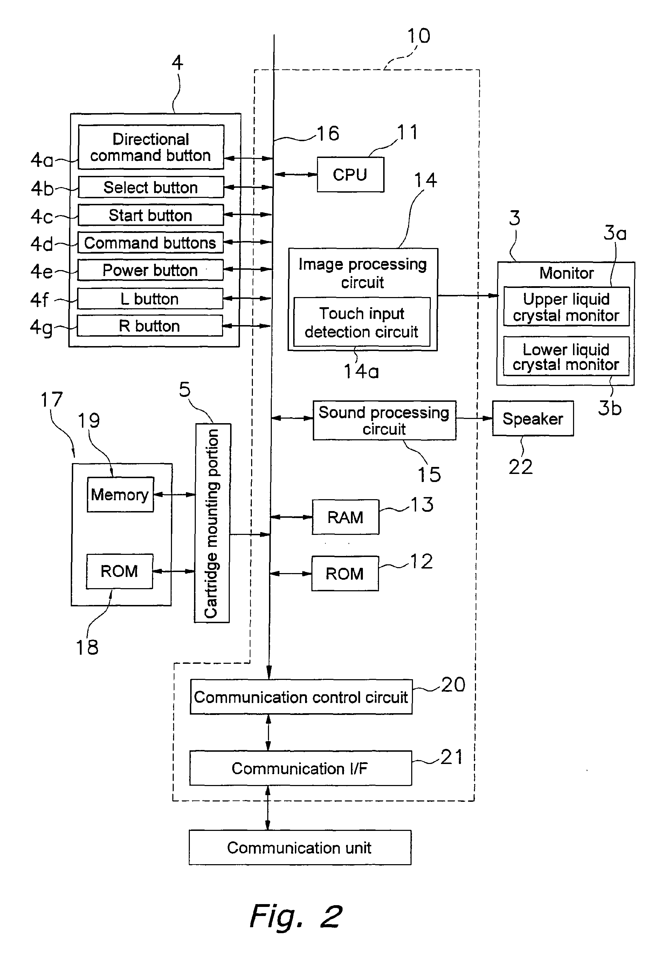

Fig. 1 is an external view of a portable game unit (an example of a computer) that can use a game program according to the present invention. In addition, Fig. 2 is one example of a control block diagram of the portable game unit.

As shown in Fig. 1, the portable game unit 1 primarily has a main case 2, a liquid crystal monitor unit 3, an input unit 4, a cartridge mounting unit 5, and a communication unit (not shown in the drawings). The main case 2 has an upper case 2a and a lower case 2b. The upper case 2a and the lower case 2b are connected to each other such that they can be opened and closed. The liquid crystal monitor unit 3 comprises an upper liquid crystal monitor 3a provided in the upper case 2a, and a lower liquid crystal monitor 3b provided in the lower case 2b. Here, for example, the upper liquid crystal monitor 3a is a non-touch panel type monitor, and the lower liquid crystal monitor 3b is a touch panel type monitor. The non-touch panel type monitor is comprised of a liquid crystal panel, and the touch panel type monitor is comprised of a liquid crystal panel and a touch panel. On the touch panel type monitor, the display surface of the liquid crystal panel and the data input surface of the touch panel are laminated together so as to be integral with each other. The input unit 4 comprises a cross-shaped directional command button 4a that is arranged on the central portion of the left side of the lower case 2b, a select button 4b and a start button 4c arranged from left to right on the upper portion of the left side of the lower case 2b, command buttons 4d that are arranged in the central portion of the right side of the lower case 2b, a power button 4e that is arranged on the upper portion of the right side of the lower case 2b, and an L button 4f and a R button 4g arranged on the left and right corners of the lower case 2b. The cartridge mounting unit 5 is provided in the lower portion of the lower case 2b. A game cartridge or the like can be mounted in the cartridge mounting unit 5. The communication unit is built into the main case 2, e.g., the lower case 2a. A local wireless network function, internet connection via wireless LAN function, or the like are provided by the communication unit. Note that a sound volume adjustment button, an earphone jack, and the like are provided in the game unit 1, but an explanation of these will be omitted.

As shown in Fig. 2, the portable game unit 1 has a control device 10 in the interior thereof. A CPU (Central Processing Unit) 11 which uses a microprocessor, a ROM (Read Only Memory) 12 as a main storage device, a RAM (Random Access Memory) 13, an image processing circuit 14, a sound processing circuit 15, and a communication control circuit 20 of the control device 10 are connected to each other via a bus 16.

The CPU 11 will interpret instructions from a game program, and will perform various types of data processing and control. The ROM 12 will store programs and the like needed for basic control of the game unit 1 (e.g., start-up control). The RAM 13 will maintain a working area for the CPU 11. The image processing circuit 14 controls the liquid crystal monitor unit 3 in response to rendering commands from the CPU 11, and displays predetermined images on at least one of the upper liquid crystal monitor 3a and the lower liquid crystal monitor 3b. In addition, a touch input detection circuit 14a is included in the image processing circuit 14. When a command means, e.g., a touch pen, a finger, or the like is brought into direct contact with the touch panel, coordinate date of the contact position will be supplied from the touch input detection circuit 14a to the CPU 11, and the contact position will be identified by the CPU 11. In addition, when the command means is brought into direct contact with the touch panel at the position of a target object displayed on the liquid crystal panel, coordinate data of the target object will be supplied from the touch input detection circuit 14a to the CPU 11, and the target object will be identified by the CPU. The sound processing circuit 15 will produce analog audio signals in response to sound generation commands from the CPU 11, and will output the same to a speaker 22. The communication control circuit 20 is included in the communication unit, and is employed in order to wirelessly connect the game unit 1 to another game unit or the like. The communication control circuit 20 is connected to the CPU 11 via the bus 16. In response to instructions from the CPU 11, the communication control circuit 20 will control and dispatch connection signals for connecting the game unit 1 to the internet via a local wireless network or a wireless LAN.

An external storage device 17 that is separate from the control device 11 is connected to the bus 16. For example, the external storage device 17 is a game cartridge that is removably mounted in the main case 2, e.g., the lower case 2b. A ROM 18 as a storage medium, and a memory 19 as a rewriteable user memory, are provided in the interior of the external storage device 17. A game program that causes the game unit 1 to function as a computer, and various types of data needed in the execution of the game program, are stored in advance in the ROM 18. The various types of data include various types of character image data, e.g., various types of panel image data, attribute image data, and the like. Rewriteable memory such as flash memory is used in the memory 19. Saved game data or the like will be stored in the memory 19 in response to need. Note that the storage medium of the external storage device 17 is not limited to a semiconductor memory element, and various other types of storage media may be used, such as a magnetic storage medium, an optical storage medium, a magneto-optical storage medium, or the like. Note also that an interface circuit is interposed between the bus 16 and each element, but illustration of these will be omitted here.

With the game unit 1 constructed as described above, a player can play various game genres on the liquid crystal monitor unit 3 by loading a game program stored in the ROM 18 of the external storage device 17, and executing the loaded game program with the CPU 11. In addition, by connecting the game unit 1 with another game unit with a wireless network, or connecting the game unit 1 with another game unit via a communication cable or the like, data can be exchanged with another game unit or a competition type game can be played via the communication control circuit 10.

### Summary of various types of processes in the game device

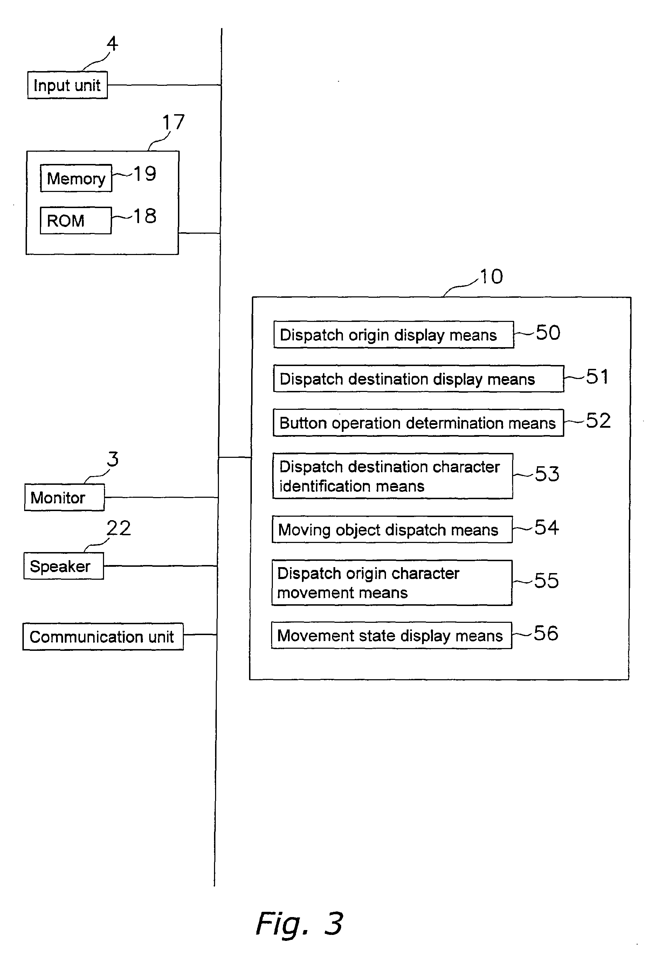

A game that can be executed in the present game unit 1 is, for example, a baseball game. Fig. 3 is a function block diagram for explaining the functions that play an essential role in the present invention.

With the game unit 1, a moving object will be dispatched from a character displayed on a touch panel type of monitor. For example, with the present game unit 1, a ball character will be dispatched from a fielder character displayed on a touch panel type of monitor. The game device 1 primarily comprises dispatch origin display means 50, dispatch destination display means 51, button operation determination means 52, dispatch destination character identification means 53, moving object dispatch means 54, dispatch origin character movement means 55, and moving state display means 56.

The dispatch origin display means 50 is implemented by a function that will display a fielder character of the ball dispatch origin on the monitor. With the dispatch origin display means 50, the fielder character of the ball dispatch origin identified by the CPU 11 will be displayed on the monitor, e.g., the liquid crystal monitor.

The dispatch origin display means 51 is implemented by a function that will display a fielder character of the ball dispatch origin on at least one monitor. With the dispatch destination display means 51, the fielder character of the ball dispatch origin identified by the CPU 11 will be displayed on at least one monitor, e.g., the lower monitor 3b. More particularly, the fielder character of the ball dispatch origin will be displayed on the touch panel liquid crystal panel of the lower monitor 3b.

The button operation determination means 52 is implemented by a function that determines whether or not a predetermined button of the operation means has been operated. With the button operation determination means 52, it will be determined by the CPU 11 whether or not a predetermined button of the operation means, e.g., the input unit 4, has been operated. More specifically, it will be determined by the CPU 11 whether or not the input signals when a predetermined button has been operated have been issued from the input unit 4 to the CPU 11.

The dispatch destination character identification means 53 is implemented by a function that will identify the fielder character of the ball dispatch destination, when the command means has been placed into contact with the fielder character of the ball dispatch destination after it has been determined that a predetermined button of the operation means has been operated by the button operation determination means 52. With the dispatch destination character identification means 53, in the event that it has been determined that a predetermined button of the operation means, e.g., the input unit 4, has been operated by means of the button operation determination means 52, then if the command means, e.g., a touch pen, finger, etc., is placed into contact with the touch panel in the position of the character of the ball dispatch destination displayed on the liquid crystal panel, the coordinate data of the fielder character of the ball dispatch destination will be supplied from the touch input detection circuit 14a to the CPU 11, and the fielder character of the ball dispatch destination will be identified by the CPU 11.

The moving object dispatch means 54 is implemented by a function that will dispatch the ball character from the character of the ball dispatch origin to the character of the ball dispatch destination identified by the ball dispatch destination character identification function. With the moving object dispatch means 54, command signals for causing the ball to be dispatched from a fielder character of the ball dispatch origin identified by the CPU 11, to the fielder character of the ball dispatch destination identified by the dispatch destination character identification function, will be issued from the CPU 11 to the monitor. Here, based upon the coordinate data of the fielder character of the ball dispatch origin and the coordinate data of the fielder character of the ball dispatch destination, a trajectory that connects the fielder character of the ball dispatch origin with the fielder character of the ball dispatch destination will be calculated by the CPU 11, and command signals for causing the ball character to move on this trajectory will be issued from the CPU 11 to the image processing circuit 14.

The dispatch origin character movement means 55 is implemented by a function that will move the fielder character of the ball dispatch origin to the fielder character of the ball dispatch destination, when the command means has been placed into contact with the fielder character of the ball dispatch destination after it has been determined that a predetermined button of the operation means has not been operated by the button operation determination means 52. With the dispatch destination character identification means 55, in the event that it has been determined that a predetermined button of the operation means, e.g., the input unit 4, has not been operated by means of the button operation determination means 52, then if the command means, e.g., a touch pen, finger, etc., is placed into contact with the touch panel in the position of the fielder character of the ball dispatch destination displayed on the liquid crystal panel, the coordinate data of the fielder character of the ball dispatch origin will be supplied from the touch input detection circuit 14a to the CPU 11, and the fielder character of the ball dispatch origin will be identified by the CPU 11. Then, command signals for causing the fielder character of the ball dispatch origin to move toward the fielder character of the ball dispatch destination will be issued from the CPU 11 to the monitor. Here, based upon the coordinate data of the fielder character of the ball dispatch origin and the coordinate data of the fielder character of the ball dispatch destination, a trajectory that connects the fielder character of the ball dispatch origin with the fielder character of the ball dispatch destination will be calculated by the CPU 11, and command signals for causing the fielder character of the ball dispatch origin to move on this trajectory will be issued from the CPU 11 to the image processing circuit 14.

The movement state display means 56 is implemented by a function that will display the movement states of the ball character and the fielder character of the ball dispatch origin on the monitor. With the movement state display means 56, the movement states of the ball character and the fielder character of the ball dispatch origin will be displayed on the monitor, e.g., the lower monitor 3b, by the image processing circuit 14 that received the command signals from the CPU 11. More particularly, the movement states of the ball character and the fielder character of the ball dispatch origin will be displayed on the liquid crystal panel of the touch panel on the lower monitor 3b.

### [Summary of the baseball game]

Next, the specific content of the baseball game of the present embodiment will be explained.

This baseball game primarily comprises a batting system that issues commands with regard to batting to a batter character, a defense system that issues commands with regard to catching and throwing to a fielder character, a pitching system that issues commands with regard to pitching to a pitcher character, and a base running system that issues commands with regard to base running to a base running character. Each of these systems is realized by a game program stored in the ROM 18, for example, and is executed in the game unit 1.

A summary of the pitching system that plays an essential role in the present invention will be explained below.

The defense system makes defensive operations possible by commanding the dispatch of balls to fielders and the movement of fielders with the command means, e.g., a touch pen, a finger, or the like.

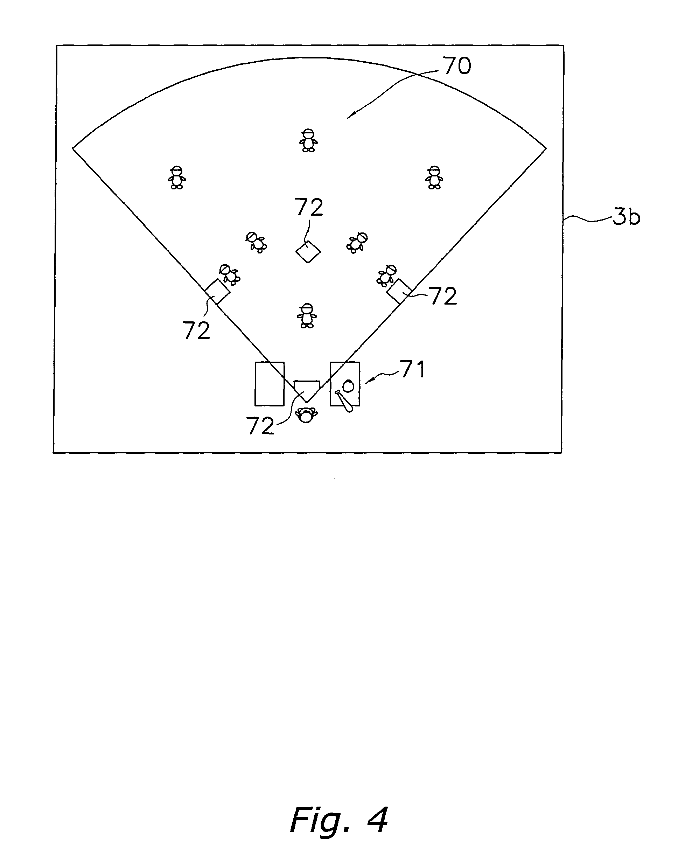

With the present baseball game, as shown in Fig. 4, if a player is to operate defense characters, then defense characters 70, a batter character 71, and base characters 72, will be primarily displayed on the lower touch panel type of monitor. For example, the defense characters 70 includes a pitcher character, a catcher character, and a plurality of fielder characters, and the base characters 72 include a home base character and first to third base characters.

For example, in the event that a player causes the ball character 73 to be dispatched from the pitcher character, and the opposing player or an AI player causes a batter character 71 to move, then if the ball character 73 hit by the batter character 71 flies to one of the fielder characters of the defense characters 70, the ball character 73 will be caught by one of the fielder characters of the defense characters 70.

When the ball character 73 is caught by one of the fielder characters of the defense characters 70, if the player places the touch pen into contact with a character other than the one fielder character of the defense characters after operating a predetermined button of the input unit 4, the ball character 73 will be dispatched from the one fielder character of the defense characters to a character other than the one fielder character of the defense characters 70. Here, in the event that the character that is in contact with the touch pen is a base character 72, the ball character 73 will be dispatched from the one fielder character of the defense characters 70 to the base character 72, as if a fielder character is present on the base. In addition, in the event that the character in contact with the touch pen is a fielder character, and that fielder character is positioned near a base character, the ball character 73 may be dispatched from the one fielder character of the defense characters 70 to a base character 72, as if the fielder character is on the base. In contrast, when the ball character 73 has been caught by one of the fielder characters of the defense characters 70, if the player places the touch pen into contact with a character other than the one fielder character of the defense characters without operating a predetermined button of the input unit 4, the one fielder character of the defense characters 70 will move to a character other than the one fielder character of the defense characters 70.

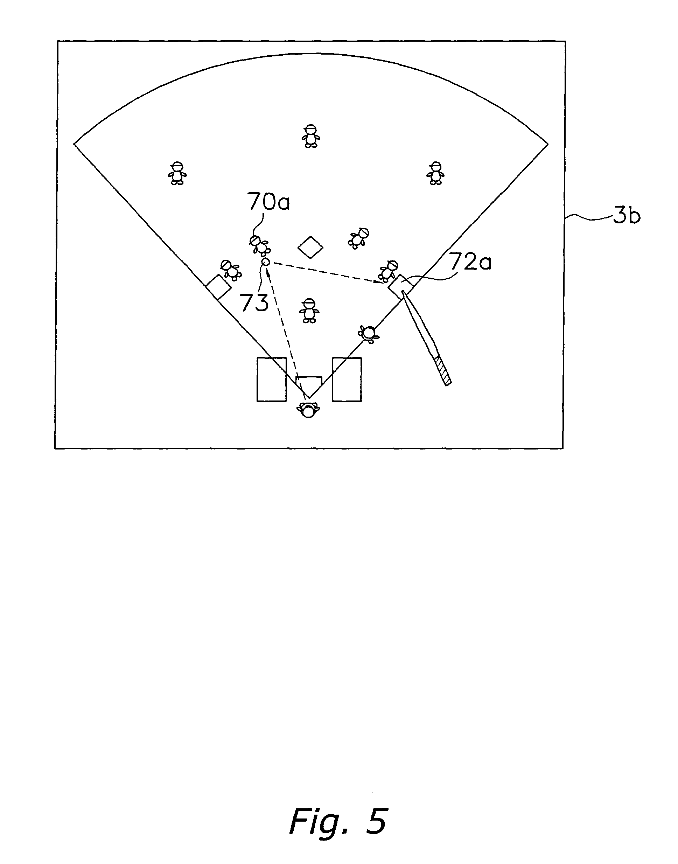

For example, as shown in Fig. 5, in the event that the ball character 73 hit by the batter character 71 has been caught by the fielder character 70a at shortstop, if the player has pushed the L button 4f of the input unit 4 and places the touch pen into contact with the base character 72a at first base, the ball character 73 will be dispatched from the fielder character 70a at shortstop to the base character 72a at first base. This corresponds to a state in a baseball game when the shortstop that caught the ball dispatches the ball to first base.

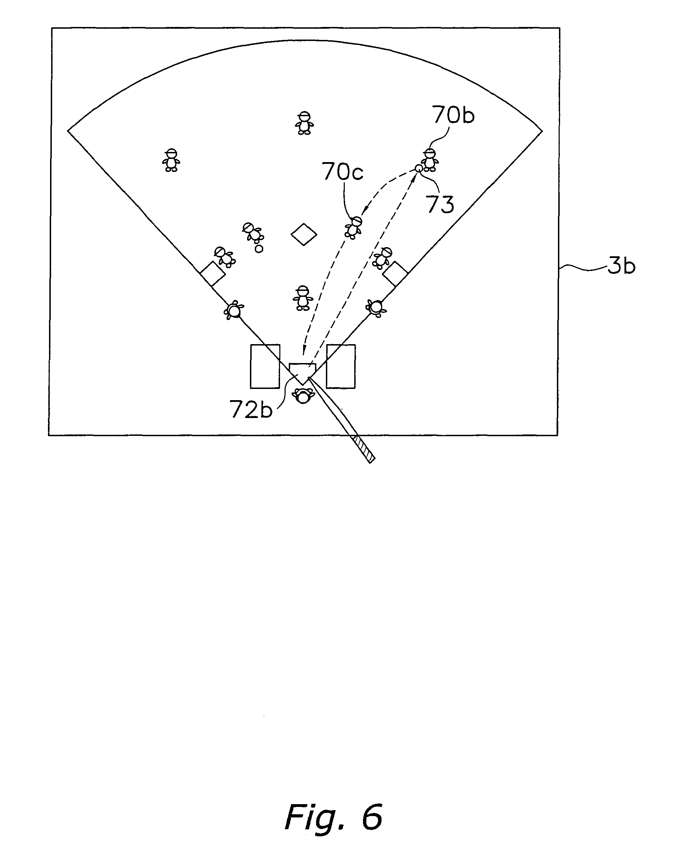

For example, as shown in Fig. 6, in the event that the ball character 73 hit by the batter character 71 has been caught by the fielder character 70b in right field, if the player has pushed the L button 4f of the input unit 4 and places the touch pen into contact with the fielder character 70c at second base, the ball character 73 will be dispatched from the fielder character in right field to the fielder character 70c at second base. Furthermore, if a player has pushed the L button 4f of the input unit 4 and places the touch pen into contact with the home base character 72, the ball character 73 will be dispatched from the fielder character 70c at second base to the home base character 72. This corresponds to a state in which the right fielder that caught the ball dispatches the ball to the second baseman, and the second baseman dispatches the ball to home base. In other words, this corresponds to a situation in which the right fielder dispatches the ball to home base via the second baseman.

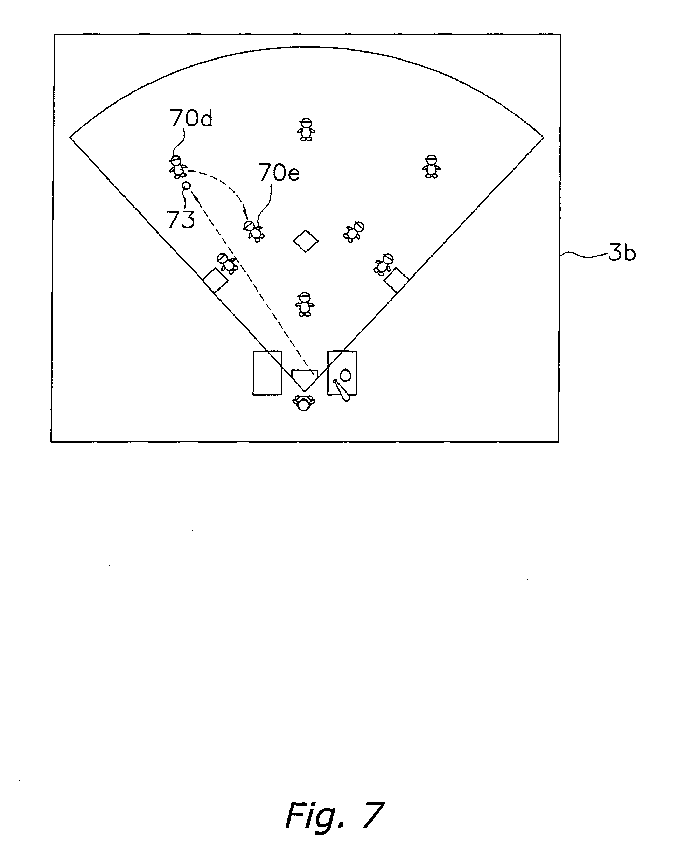

For example, as shown in Fig. 7, in the event that the ball character 73 hit by the batter character 71 has been caught by the fielder character 70d in left field, if the player has not pushed the L button 4f of the input unit 4 and places the touch pen into contact with the fielder character 70e at shortstop, the fielder character 70d in left field will move to the fielder character 70e at shortstop. This corresponds to a state in which the left fielder that caught the ball brings the ball to the shortstop in order to avoid the risk of dispatching the ball.

### [Each process flow during execution of the defense system]

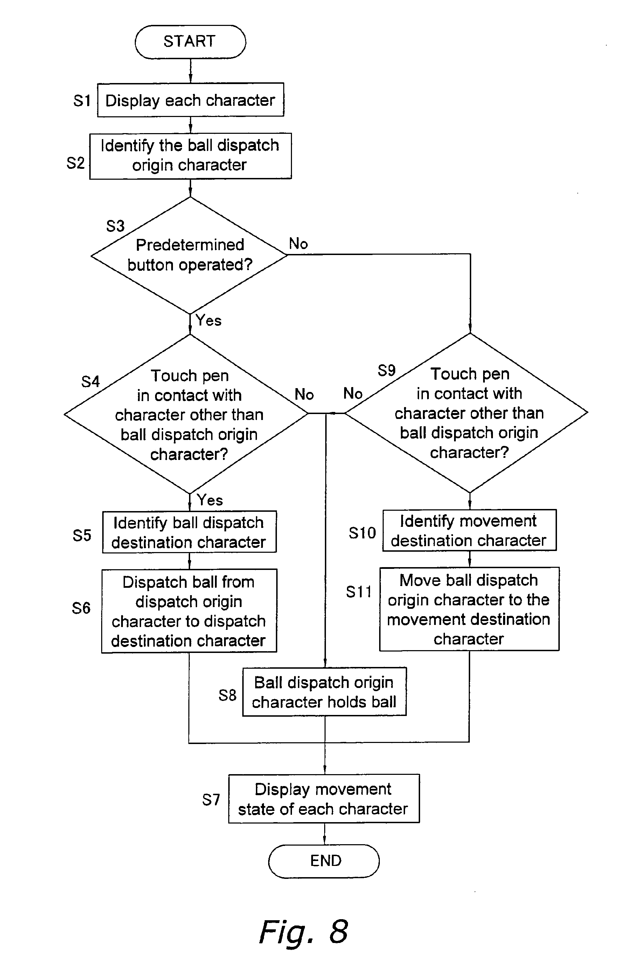

The flowchart shown in Fig. 8 will be used to explain the defense system in the baseball game of the present embodiment.

If a player is to operate defense characters, a plurality of defense characters 70 and each base character 72 will be displayed on the lower touch panel type of monitor (S1). The plurality of defense characters 70 include, for example, a pitcher character, a catcher character, and fielder characters. The base characters 72 include the home base character 72 and first to third base characters 72. In this state, if one of the plurality of defense characters 70 catches a ball hit by the batter character 71, the defense character 70 that caught the ball will be identified as the ball dispatch origin character (S2). At this point, it will be determined whether or not a predetermined button of the input unit 4 has been operated (S3). Here, for example, the L button 4f corresponds to the predetermined button, and it will be determined whether or not the L button 4f of the input unit 4 has been pushed.

If it is determined that the L button 4f of the input unit 4 has been pushed (S3 is yes), then it will be determined whether or not the touch pen has been placed into contact with a character other than the ball dispatch origin character (S4). If it has been determined that the touch pen has been placed into contact with a character other than the ball dispatch origin character (S4 is yes), the character other than the ball dispatch origin character will be identified as the ball dispatch destination character (S5). Then, the ball will be dispatched from the ball dispatch origin character to the ball dispatch destination character (S6). Then, the movement state of the ball character 73 from the ball dispatch origin character to the ball dispatch destination character will be displayed on the monitor (S7). In contrast, if it has been determined that the touch pen has not been placed into contact with a character other than the ball dispatch origin character (S4 is no), the ball will be maintained in a state in which the ball dispatch origin character holds the ball, and will not be dispatched from the ball dispatch origin character to the ball dispatch destination character (S8). Then, the ball dispatch origin character will be displayed on the monitor in a state in which it is holding the ball (S7).

If it is determined that the L button 4f of the input unit 4 has not been pushed (S3 is no), then it will be determined whether or not the touch pen has been placed into contact with a character other than the ball dispatch origin character (S9). Then, if it has been determined that the touch pen has been placed into contact with a character other than the ball dispatch origin character (S9 is yes), the character other than the ball dispatch origin character will be identified as the movement destination character (S10). Then, the ball dispatch origin character will move toward the movement destination character (S11). Then, the ball dispatch origin character will be displayed on the monitor in a state in which it is moving toward the movement destination character (S7). In contrast, if it has been determined that the touch pen has not been placed into contact with a character other than the ball dispatch origin character (S9 is no), the ball will be maintained in a state in which it is not dispatched from the ball dispatch origin character to the ball dispatch destination character, and will be held by the ball dispatch origin character (S8). Then, the ball dispatch origin character will be displayed on the monitor in a state in which it is holding the ball (S7).

[Other embodiments]
(a) With the aforementioned embodiment, an example was illustrated in which the portable game unit 1 was used as an example of a computer that can utilize the game program, however the game device is not limited to the aforementioned embodiment, and can also utilize in the same way a game device formed separately from a monitor, a game device for commercial use that is formed integrally with a monitor, and a personal computer, a workstation, or the like that functions as a game device by executing a game program.

(b) The present invention also includes a program and method for executing the game described above, and a computer readable storage medium on which the program is stored. Other than the cartridge, examples of recording media include computer readable flexible disks, semiconductor memory, CD-ROM, DVD, MO, ROM cassettes, and the like.

### [Industrial Applicability]

In the present invention, the dispatch destination character will be identified when the command means has been placed into contact with the dispatch destination character after it has been determined that a predetermined button of the operation means has been operated. At this point, the moving object will be dispatched from the dispatch origin character to the identified dispatch destination character. In this way, a player can dispatch a moving object from the dispatch origin character to the dispatch destination character with a simple operation in which a command means is placed into contact with the dispatch destination character. In this way, a player can accurately and easily input commands that cause a moving object to be dispatched to a character.

## Claims

1. A game program for causing a computer to implement a game in which a moving object is dispatched from a character displayed on a touch panel type of monitor, comprising:
a dispatch origin display function that will display a character dispatch origin of a moving object,
a dispatch destination display function that will display a character dispatch destination of the moving object,
a button operation determination function that will determine whether or not a predetermined button of an operation means has been operated,
a dispatch destination character identification function that will, after it has been determined by the button operation determination function that the predetermined button of the operation means has been operated, identify the dispatch destination character when a command means is placed into contact with the dispatch destination character, and
a moving object dispatch function that will dispatch the moving object from the dispatch origin character to the dispatch destination character identified by the dispatch destination character identification function.

2. The game program according to claim 1, wherein the computer further implements a dispatch origin character movement function that will, after it has been determined by the button operation determination function that the predetermined button of the operation means has not been operated, move the dispatch origin character to the dispatch destination character when the command means is placed into contact with the dispatch destination character.

3. A game device capable of implementing a game in which a moving object is dispatched from a character displayed on a touch panel type of monitor, comprising:
dispatch origin display means that will display a character dispatch origin of a moving object,
dispatch destination display means that will display a character dispatch destination of the moving object,
button operation determination means that will determine whether or not a predetermined button of an operation means has been operated,
dispatch destination character identification means that will, after it has been determined by the button operation determination means that the predetermined button of the operation means has been operated, identify the dispatch destination character when a command means is placed into contact with the dispatch destination character, and
moving object dispatch means that will dispatch the moving object from the dispatch origin character to the dispatch destination character identified by the dispatch destination character identification means.

4. A game method capable of implementing a game in which a moving object is dispatched from a character displayed on a touch panel type of monitor, comprising:
a dispatch origin display step that will display a character dispatch origin of a moving object,
a dispatch destination display step that will display a character dispatch destination of the moving object,
a button operation determination step that will determine whether or not a predetermined button of an operation means has been operated,
a dispatch destination character identification step that will, after it has been determined by the button operation determination step that the predetermined button of the operation means has been operated, identify the dispatch destination character when a command means is placed into contact with the dispatch destination character, and
a moving object dispatch step that will dispatch the moving object from the dispatch origin character to the dispatch destination character identified by the dispatch destination character identification step.
